# EUROPEAN PATENT APPLICATION

(11) **EP 4 847 570 A1**
(43) Date of publication of application: **02.12.2026**
(21) Application number: 25179899.7
(22) Date of filing: 30.05.2025
(51) Int. Cl.: C09D 5/18, B60L 50/64, C09D 7/61, C09D 7/62, C09D 163/00

(54) **TWO-PART NON-INTUMESCENT SAFETY COATING COMPOSITION**

(71) Applicant: Henkel AG & Co. KGaA, 40589 Düsseldorf (DE)
(72) Inventor: Franken, Uwe, 41542 Dormagen (DE); Kreiskoether, Kim Dana, 47495 Rheinberg (DE); Lammerschop, Olaf, 47802 Krefeld (DE); Demir, Furkan, 51373 Leverkusen (DE); Shibutani, Kazushi, 40667 Meerbusch (DE)

(57) **Abstract**

The present invention relates to a two-part non-intumescent safety coating composition providing stable, scratch resistant coating providing protection even after fire exposure of 1400°C.

## Description

### Technical field of the invention

The present invention relates to a two-part non-intumescent safety coating composition providing stable, scratch resistant coating providing protection even after fire exposure of 1400°C.

### Background of the invention

Number of electric vehicles have increased rapidly in the recent years and a battery is a main power source in the electric vehicles. Since the battery is the main power source for the electric vehicles, battery capacity, energy density, and fire safety are major concerns for all electric vehicle manufacturers. In accidents involving collisions, an electric vehicle can catch a fire, and therefore, the battery should be capable to withstand an external heat and fire, thus extending the time for passengers to evacuate the electric vehicle. Therefore, the battery safety is one of the most important challenges.

One way to enable the battery of the electric vehicle to withstand elevated external heat and fire is a fire protection coating. The fire protection coating is a material that, in the event of a fire, the material comes into a contact with heat and fire, it expands from a coating thickness of few millimetres to a thick foam layer of several centimetres (up to expansion rate of 40 times the thickness of the coating layer). This type of coating is also called to an intumescent coating. The expanded coating layer effectively insulates the battery compartment from the elevated temperature and fire, and therefore, prevents burns caused by a drastic rise in temperature inside the battery, stabilizes the structure of the battery box, and ultimately provides more time to the passengers to evacuate the vehicle.

The fire protection coating is suitable for both traditional battery casings made of iron, steel, and aluminium alloy as well as light-weight plastic casings made of PPS, SMC, flame-retardant PP, nylon and glass fibre. The fire protection coating is a lightweight and effective way to protect the battery from fire compared to alternative fire protection concepts.

One way to provide a fire protection coating is to use of mica sheets as a fire protection sheet. The use of mica sheets is a manual and labour-intensive process, furthermore, despite high density and good protection, mica sheets are not flexible. Therefore, this coating type is not suitable for large production volumes, which require high speed and accuracy.

Another way to provide the fire protection coating is to apply a fire-retardant composition on a surface of a battery box. There are various 1K and 2K fire-retardant compositions available for different surfaces, however, most of such compositions do not meet required heat and fire-retardant properties or meet the high process speed and accuracy requirements for battery box coating applications.

Often crosslinked intumescent layer for battery fire protection is formed by using compositions comprising flame-retardant component such as ammonium polyphosphate and calcium carbonate. An intumescent layer created by expandable gas has a foam kind of structure which leave room for an improvement what comes to particle bombardment in an event of fire in a battery. This kind of protective layer may be blowed away partially or completely and full protection is no longer provided.

Therefore, there is still a need for a safety coating composition providing excellent and stable fire and heat protection, an increased mechanical strength to withstand the particle blast in an event of a fire and electrical insulation before, during, and after the battery cell thermal runaway event, while enabling an automated and accurate high-speed process for applying a safety coating on a substrate.

### Short summary of the invention

The present invention relates to a two-part non-intumescent safety coating composition comprising a first part comprising a) an epoxy resin; b) a coupling agent; and a second part comprising a) a curing agent; wherein the composition further comprises wollastonite, wherein wollastonite may be present in the first part of the composition or in the second part of the composition or in the first part and the second part of the composition, and wherein the composition further comprises an inorganic filler, wherein the inorganic filler does not provide an expansion gas upon thermal decomposition, and wherein the inorganic filler may be present in the first part of the composition or in the second part of the composition or in the first part and the second part of the composition.

The present invention also relates to a cured product of the two-part non-intumescent safety coating composition according to the present invention.

The present invention encompasses use of two-part non-intumescent safety coating composition or cured product according to the present invention in a battery, a battery box, a battery box lid, busbars, electronic covers, and structural parts of an e-vehicle.

The present invention also encompasses a battery comprising a safety coating layer formed from a crosslinked two-part non-intumescent safety coating composition or cured product according to the present invention.

The present invention relates to a process to apply the two-part non-intumescent safety coating composition according to the present invention onto a substrate comprising a step of applying the composition by an automated dispenser.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of'* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

*"Two-component (2K) compositions"* are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a two-part non-intumescent safety coating composition comprising a first part comprising a) an epoxy resin; b) a coupling agent; and a second part comprising a) a curing agent; wherein the composition further comprises wollastonite, wherein wollastonite may be present in the first part of the composition or in the second part of the composition or in the first part and the second part of the composition, and wherein the composition further comprises an inorganic filler wherein the inorganic filler does not provide an expansion gas upon thermal decomposition, wherein the inorganic filler may be present in the first part of the composition or in the second part of the composition or in the first part and the second part of the composition.

The Applicant has found out that the composition according to the present invention provides stable, scratch resistant safety coating, which provides protection even after fire exposure of 1400°C. There is no expansion gas formation when the composition according to the present invention is exposed to heat and/or fire. Further, the composition according to the present invention is an easy applicable liquid forming a hard and stable safety coating after exposure to fire.

The first part of the composition and the second part of the composition are mixed from 1:1 to 4:1 weight ratio.

In one embodiment, the first part of the composition and the second part of the composition are mixed in 1:1 ratio.

In another embodiment, first part of the composition and the second part of the composition are mixed in 2:1 ratio.

Yet in another embodiment, first part of the composition and the second part of the composition are mixed in 3:1 ratio.

In a highly preferred embodiment, the first part and the second part are mixed in 4:1 weight ratio.

The first part of the two-part non-intumescent safety coating composition according to the present invention comprises an epoxy resin.

The epoxy resin adheres the composition according to the present invention to the substrate and binds the composition components together, while ensures the mechanical and chemical stability.

Epoxy resins as used herein may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Further, the epoxy resin may also be monomeric or polymeric.

Preferably, the epoxy resin is selected from the group consisting of a phenol novolac epoxy resin, a bisphenol A epoxy resin, a bisphenol F epoxy resin, a naphthalene-modified cresol novolac epoxy resin, a cresol novolac epoxy resin, a biphenyldimethylene epoxy resin, and mixtures thereof, more preferably the epoxy resin is a phenol novolac epoxy resin.

Phenol novolac epoxy resin is preferred because it provides good adhesion properties, and high thermal stability.

Suitable commercially available epoxy resins for use in the present invention include but are not limited to YDPN 638 NI and YDPN 628 from Kukdo.

The epoxy resin may be present in the first part of the composition in a quantity from 5 to 40% by weight, based on the total weight of the first part of the composition, preferably from 7 to 20%, and more preferably from 10 to 14%.

The above ranges are preferred because they may provide optimal adhesion properties, heat and flame retardant behaviour and rheological properties for the composition.

The two-part non-intumescent safety coating composition according to the present invention comprises wollastonite.

Wollastonite has a high melting point and can withstand high temperatures. Further, wollastonite has low water solubility and is resistant to chemical weathering and does not dissolve easily in water. In addition, wollastonite has low thermal conductivity, which makes it an effective insulator.

Typically, ammonium polyphosphate (APP) has been used as a fire-retardant component in safety coating compositions. Surprisingly the applicant has found out that by replacing APP by wollastonite a safety coating can be created which is even, scratch resistant and very stable after fire exposure up to 1400°C. Furthermore, a coating based on wollastonite is non-intumescent.

Wollastonite may be present in the first part of the composition or the second part of the composition or in both the first part and the second part of the of the composition.

In a highly preferred embodiment wollastonite is present in both the first part and in the second part of the of the two-part non-intumescent safety coating composition.

Suitable commercially available wollastonite for use in the present invention include but is not limited to Casiflux G20 from SCR-SIBELCO.

Wollastonite may be present in the first part of the composition in a quantity from 45 to 75% by weight, based on the total weight of the first part of the composition, preferably from 48 to 70%, and more preferably from 52 to 63%,
and/or
the wollastonite may be present in the second part of the composition in a quantity from 20 to 75% by weight, based on the total weight of the second part of the composition, preferably from 25 to 73%, and more preferably from 27 to 70%.

The above listed quantities are preferred because higher quantities may lead to too high viscosity and therefore, the application of the composition may be adversely affected, whereas too low quantities may have a negative effect on fire and heat protection properties.

The two-part non-intumescent safety coating composition according to the present invention comprises an inorganic filler. Suitable inorganic filler for use in the present invention does not generate an expansion gas upon thermal decomposition. It is noted that the two-part non-intumescent safety coating composition according to the present invention does not contain calcium carbonate and/or ammonium polyphosphate.

The inorganic filler may be present in the first part of the composition or in the second part of the composition or in both the first part and the second part of the composition.

Preferably, the inorganic filler is same or different in the first part and in the second part of the composition, and independently selected from the group consisting of talc, silica, silicone rubber powder, fly ash, trass, zirconia, zirconium silicate, glass, glass bubbles, glass microspheres, hollow glass spheres, ceramics, ceramic bubbles, ceramic microspheres, ceramic bubbles, kaolin, titanium oxide, vinyl functionalized aluminium silicate/kaolinite, zirconia silicate, and mixtures thereof, preferably the inorganic filler in the first part and/or in the second part is talc, glass bubbles, fly ash, silica, vinyl functionalized aluminium silicate/kaolinite, zirconia silicate, and mixtures thereof.

Suitable commercially available inorganic fillers for use in the present invention include but are not limited to Aktifit VM from Hoffmann Mineral GmbH.

The inorganic filler may be present in the first part of the composition in a quantity from 5 to 25% by weight, based on the total weight of the first part of the composition, preferably from 10 to 20%, and more preferably from 13 to 17%,
and/or
the inorganic filler may be present in the second part of the composition in a quantity from 25 to 60% by weight, based on the total weight of the second part of the composition, preferably from 27 to 55%, and more preferably from 30 to 47%.

These quantities are preferred because they may provide ideal viscosity and fire and heat protection properties. If the inorganic filler quantity is too high, this may lead to too high viscosity of the composition, whereas too low quantities may lead to inadequate fire and heat protection properties The two-part non-intumescent safety coating composition according to the present invention comprises a coupling agent.

In a preferred embodiment, the coupling agent is present in the first part of the composition.

Preferably, the coupling agent is a silane coupling agent, preferably selected from the group consisting of epoxy functional silane oligomer, γ-aminopropyltriethoxysilane, γ-mercaptopropyltrimethoxysilane, γ-methacryloxypropyltrimethoxysilane, γ-glycidoxypropyltrimethoxylsilane, phenyltrimethoxysilane, and mixtures thereof, preferably the coupling agent is epoxy functional silane oligomer.

Suitable commercially available coupling agents for use in the present invention include but are not limited to Dynasylan AMMO, GLYMO from Evonik and CoatOSil MP 200 from Momentive.

The coupling agent may be present in a quantity from 0.1 to 10% by weight, based on the total weight of the first part of the composition, preferably from 0.5 to 7%, and more preferably from 1 to 5%.

These coupling agent quantities are preferred because higher quantities, more than 5% may lead to decrease cohesive properties whereas quantities less than 0.1% may lead to no enhanced adhesion properties.

The two-part non-intumescent safety coating composition according to the present invention comprises a curing agent.

The curing agent is present in the second part of the composition.

Preferably the curing agent includes one or more of: i) at least one polyamine having at least two amine hydrogens reactive toward epoxide groups; ii) at least one tertiary polyamide compound having at least two amine hydrogens reactive toward epoxide groups; groups; iii) at least one poly(amidoamine) compound having at least two amine hydrogens reactive toward epoxide; and iv) at least one polyetheramine compound having at least two amine hydrogens reactive toward epoxide.

In a preferred embodiment, the curing agent is selected from the group consisting of N,N'-bis(3-aminopropyl)ethylenediamine, m-xylylenediamine (MXDA), N'-[2-(2-aminoethylamino)ethyl]ethane-1,2-diamine, and mixtures thereof, preferably the curing agent is N'-[2-(2-aminoethylamino)ethyl]ethane-1,2-diamine.

Suitable commercially available curing agent for use in the present invention include but is not limited to Ancamine TETA from Evonik.

The curing agent may be present in second part of the composition in a quantity from 5 to 25% by weight, based on the total weight of the second part of the composition, preferably from 10 to 20%, and more preferably from 13 to 17%.

The above-mentioned ranges are based on the quantity of the epoxy resin in the first part of the composition and the total quantity of the curing agent in the second part of the composition, and are preferred, because they may lead to a complete reaction without unreacted epoxy resin being present in the final composition.

The two-part non-intumescent safety coating composition according to the present invention may further comprises a plasticizer. The plasticizer improves flexibility of the composition by decreasing the viscosity.

The plasticizer may be present in the first part of the composition, or in the second part of the composition or in both the first part and the second part of the composition.

Suitable plasticizers for use in the present invention are for example diurethanes; ethers of monofunctional, linear or branched C4-C16 alcohols, such as Cetiol OE (obtainable from BASF; esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

The plasticizer may be same or different in the first part and in the second part, and may be independently selected from the group consisting of tri-isobutyl phosphate (TiBP), triethyl phosphate (TEP), tributyl phosphate (TBP), di-isononyl phosphate (DINP), diphenyl cresyl phosphate (DPK), benzoic acid alkyl ester, di-isodecyl phthalate (DIOP), and mixtures thereof, preferably the plasticizer in the first part and in the second part is tri-isobutyl phosphate (TiBP).

Suitable commercially available plasticizer for use in the present invention include but is not limited to TiBP from Overlack.

The plasticizer may be present in the first part of the composition a quantity from 2 to 20% by weight, based on the total weight of the first part of the composition, preferably from 7 to 15%, and more preferably from 10 to 14%,
and/or
the plasticizer may be present in the second part of the composition in a quantity from 2 to 15% by weight, based on the total weight of the second part of the composition, preferably from 4 to 12%, and more preferably from 6 to 11%.

These plasticizes quantities are preferred because higher quantities, more than 15%, may lead to decrease of cohesive properties whereas quantities, less than 2%, may lead to detrimental increase of viscosity and flexibility leading to poor applicability and performance.

The two-part non-intumescent safety coating composition according to the present invention may further comprise a pigment.

The pigment may be used to visually see and check that the components are well mixed. In addition, the pigment in one part of the composition provides a contrast between the mixed material and the substrate for visual inspection of the coating.

The pigment may be present in the first part of the composition or in the second part of the composition.

The pigment may be same or different in the first part and the second part of the composition and is independently selected from the group consisting of titanium dioxide, carbon black, graphite, iron oxide and mixtures thereof, preferably the pigment is selected from the group consisting of titanium dioxide, carbon black, iron oxide, and mixtures thereof.

Suitable commercially available pigment for use in the present invention include but is not limited to Printex60 from Orion.

The pigment may be present in the first part of the composition from 0.01 to 2% by weight of the total weight of the first part of the composition, preferably from 0.05 to 1%, and more preferably from 0.05 to 0.5%
or
the pigment may be present in the second part of the composition from 0.01 to 2% by weight of the total weight of the second part of the composition, preferably from 0.05 to 1%, and more preferably from 0.05 to 0.5%.

The two-part non-intumescent safety coating composition according to the present invention may further comprise a dispersing agent. The dispersing agent provides stability for the fillers and pigments in the composition.

The dispersing agent may be present in the first part of the composition or the in second part of the composition or in both the first part and the second part of the composition.

Suitable dispersing agents for use in the present invention are for example phosphoric acid esters such as BYK W 9010 from BYK.

The dispersing agent may be present in the first part of the composition from 0.01 to 2% by weight of the total weight of the first part of the composition, preferably from 0.05 to 1%, and more preferably from 0.05 to 0.5%,
and/or
the dispersing agent may be present in the second part of the composition from 0.01 to 2% by weight of the total weight of the second part of the composition, preferably from 0.05 to 1%, and more preferably from 0.05 to 0.5%.

In one embodiment the two-part non-intumescent safety coating composition comprising a first part comprising
a) from 4 to 40% by weight of the total weight of the first part of the composition of an epoxy resin;
b) from 0.1 to 10% by weight of the total weight of the first part of the composition of a coupling agent;
c) from 45 to 75% by weight of the total weight of the first part of the composition of wollastonite;
d) from 5 to 25% by weight of the total weight of the first part of the composition of an inorganic filler;
e) optionally from 5 to 20% by weight of the total weight of the first part of the composition of a plasticizer;
f) optionally from 0.01 to 2% by weight of the total weight of the first part of the composition of a dispersing agent; and
g) optionally from 0.01 to 2% by weight of the total weight of the first part of the composition of a pigment,
and
a second part comprising
a) from 5 to 25% by weight of the total weight of the first part of the composition of a curing agent;
b) from 20 to 75% by weight of the total weight of the first part of the composition of wollastonite;
c) from 25 to 60% by weight of the total weight of the first part of the composition of an inorganic filler;
d) optionally from 2 to 15% by weight of the total weight of the first part of the composition of a plasticizer;
e) optionally from 0.01 to 2% by weight of the total weight of the first part of the composition of a dispersing agent; and
f) optionally from 0.01 to 2% by weight of the total weight of the first part of the composition of a pigment,
wherein the inorganic filler does not provide an expansion gas upon thermal decomposition.

In another embodiment the two-part non-intumescent safety coating composition comprising a first part comprising
a) from 7 to 20% by weight of the total weight of the first part of the composition of an epoxy resin;
b) from 0.5 to 7% by weight of the total weight of the first part of the composition of a coupling agent;
c) from 48 to 70% by weight of the total weight of the first part of the composition of wollastonite;
d) from 10 to 20% by weight of the total weight of the first part of the composition of an inorganic filler;
e) optionally from 7 to 15% by weight of the total weight of the first part of the composition of a plasticizer;
f) optionally from 0.05 to 1% by weight of the total weight of the first part of the composition of a dispersing agent; and
g) optionally from 0.05 to 1% by weight of the total weight of the first part of the composition of a pigment,
and
a second part comprising
a) from 10 to 20% by weight of the total weight of the first part of the composition of a curing agent;
b) from 25 to 73% by weight of the total weight of the first part of the composition of wollastonite;
c) from 27 to 55% by weight of the total weight of the first part of the composition of an inorganic filler;
d) optionally from 4 to 12% by weight of the total weight of the first part of the composition of a plasticizer;
e) optionally from 0.05 to 1% by weight of the total weight of the first part of the composition of a dispersing agent; and
f) optionally from 0.05 to 1% by weight of the total weight of the first part of the composition of a pigment,
wherein the inorganic filler does not provide an expansion gas upon thermal decomposition.

Yet in another embodiment the two-part non-intumescent safety coating composition comprising a first part comprising
a) from 10 to 14% by weight of the total weight of the first part of the composition of an epoxy resin;
b) from 1 to 5% by weight of the total weight of the first part of the composition of a coupling agent;
c) from 52 to 63% by weight of the total weight of the first part of the composition of wollastonite;
d) from 13 to 17% by weight of the total weight of the first part of the composition of an inorganic filler;
e) optionally from 10 to 14% by weight of the total weight of the first part of the composition of a plasticizer;
f) optionally from 0.05 to 0.5% by weight of the total weight of the first part of the composition of a dispersing agent; and
g) optionally from 0.05 to 0.5% by weight of the total weight of the first part of the composition of a pigment,
and
a second part comprising
a) from 13 to 17% by weight of the total weight of the first part of the composition of a curing agent;
b) from 27 to 70% by weight of the total weight of the first part of the composition of wollastonite;
c) from 30 to 47% by weight of the total weight of the first part of the composition of an inorganic filler;
d) optionally from 6 to 11% by weight of the total weight of the first part of the composition of a plasticizer;
e) optionally from 0.05 to 0.5% by weight of the total weight of the first part of the composition of a dispersing agent; and
f) optionally from 0.05 to 0.5% by weight of the total weight of the first part of the composition of a pigment,
wherein the inorganic filler does not provide an expansion gas upon thermal decomposition.

The present invention relates to a cured product of the two-part non-intumescent safety coating composition according to the present invention.

The two-part non-intumescent safety coating composition according to the present invention may be cured at the room temperature or alternatively in an oven at elevated temperature to speed up the curing process.

The present invention relates to use of the two-part non-intumescent safety coating composition or cured product according to the present invention in a battery, a battery box, a battery box lid, busbars, electronic covers, and structural parts of an e-vehicle.

The two-part non-intumescent safety coating composition according to the present invention may be used inside and/or outside of the battery box. In a preferred embodiment, the two-part non-intumescent safety coating composition is used inside of the battery box.

The present invention also encompasses a battery comprising a safety coating layer formed from a crosslinked two-part non-intumescent safety coating composition or cured product according to the present invention. The battery is an e-vehicle battery.

The present invention relates to process to apply the two-part non-intumescent safety coating composition according to the present invention onto a substrate comprising a step of applying the composition by an automated dispenser.

The application may be done for example by using flat stream coating.

The composition according to the present invention is a liquid which is easy to apply to form a safety coating, which will be hard and stable after exposure to fire providing excellent fire and heat protection.

### Examples

The compositions in the below examples were prepared as follows:
All the ingredients of the first part were combined in one container (plastic container) and mixed by Hauschild speed mixer at the same time all the ingredients of the second part were combined in another container (plastic container) and mixed by Hauschild speed mixer. Subsequently the first and second parts were combined together to yet another container (plastic container) and mixed by Hauschild speed mixer prior the use.

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.

The two-part non-intumescent safety coating composition according to the present invention and comparative examples were prepared in accordance with Table 1 herein below.

**Table 1**

| Product Name | Function | Example 1 | Example 2 | Example 3 | Example 4 | Example 5 | Example 6 | Comp. example 1 | Comp. example 2 |
|---|---|---|---|---|---|---|---|---|---|
| FIRST PART | | | | | | | | | |
| YDPN 638 NI | Phenol Novolac Epoxy Resin | 12 | 12 | 12 | 12 | | 12 | | 12 |
| YDPN 628 | Phenol Novolac Epoxy Resin | | | | | 26 | | 46.49 | |
| YD-128 | Epoxy resin | | | | | | | | |
| CoatOSil MP 200 | Coupling Agent | 4 | 2 | 2 | 2 | 4 | 2 | | |
| TiBP | Plasticizer | 15 | 15,8 | 16 | 14 | | 7 | | 7 |
| Disflamoll DPK | Plasticizer | | | | | | | 8.61 | |
| Omya BLH | Chalk | | | | | | | | 62 |
| Heloxy Modifier Z8 | Epoxy diluent | | | | | | | | 2 |
| Ammonium polyphosphate | Intumicent fire retardant additive | | | | | | | 43 | 17 |
| VS5500 | Glass Bubbles | | | 11 | | | | | |
| Micro Talcum SM 4 | Talc | | 11,2 | | | | | | |
| Aktifit VM | Reactive Filler | 12 | | | | | | | |
| Casiflux G20 | Wollastonite | 57 | 59 | 59 | 59 | 56 | 58 | | |
| Fly Ash | Filler | | | | 13 | 14 | | | |
| Denka SFP-30M | Spherical Silica Particles | | | | | | 6 | | |
| Denka FB 950 | Spherical Silica Particles | | | | | | 14 | | |
| BYK W 9010 | Dispersing Agent | | | | | | 1 | | |
| Pigment | TiO₂ | | | | | | | 1 | |
| Total [%] | | 100 | 100 | 100 | 100 | 100 | 100 | 100 | 100 |
| | | | | | | | | | |
| SECOND PART | | | | | | | | | |
| Ancamine TETA | Curing agent | 15 | 15 | 15 | 15 | 32 | 10 | | 9 |
| Ancamine 2432 | Curing agent | | | | | | | 24 | |
| Ancamine 2719 | Curing agent | | | | | | | 16 | |
| Ancamine 3030 | Curing agent | | | | | | | | 11 |
| Printex60 | Colourant | 0,1 | 0,1 | 0,1 | 0,1 | 0,1 | | 0.1 | |
| Omya BLH | Chalk | | | | | | | 59.1 | 79.9 |
| VS 5500 | Glass Bubbles | | | 35 | | | | | |
| Denka SFP-30M | | | | | | | 10 | | |
| Denka FB 950 | | | | | | | 41,5 | | |
| Casiflux G20 | Wollastonite | 30 | 30 | 30 | 30 | 67,9 | 30 | | |
| Micro Talcum SM 4 | Talc | | 38,1 | | | | | | |
| Fly Ash | Filler | | | | **41,9** | | | | |
| Aktifit VM | Reactive Filler | 36,4 | | | | | | | |
| TiBP | Plasticizer | 18,5 | 16,8 | 30 | 13 | | 8,5 | | |
| Rheobyk 410 | Rheology modifier | | | | | | | 0.2 | |
| Cab O Sil M5 | Aerogel | | | | | | | 0.6 | |
| Total [%] | | 100 | 100 | 110,1 | 100 | 100 | 100 | 100 | 100 |
| Mixing Ratio (100 A/ x B) | | 25 | 25 | 25 | 25 | 25 | 25 | 25 | 25 |

## Claims

1. A two-part non-intumescent safety coating composition comprising
a first part comprising
a) an epoxy resin;
b) a coupling agent;
and
a second part comprising
a) a curing agent;
wherein the composition further comprises wollastonite, and wherein wollastonite may be present in the first part of the composition or in the second part of the composition or in the first part and the second part of the composition, and wherein the composition further comprises an inorganic filler wherein the inorganic filler does not provide an expansion gas upon thermal decomposition, and wherein the inorganic filler may be present in the first part of the composition or in the second part of the composition or in the first part and the second part of the composition.

2. The two-part non-intumescent safety coating composition according to claim 1, wherein the first part and the second part are mixed in from 1:1 to 4:1 ration, preferably in 4:1 weight ratio.

3. The two-part non-intumescent safety coating composition according to claim 1 or 2, wherein the epoxy resin is selected from the group consisting of a phenol novolac epoxy resin, a bisphenol A epoxy resin, a bisphenol F epoxy resin, a naphthalene-modified cresol novolac epoxy resin, a cresol novolac epoxy resin, a biphenyldimethylene epoxy resin, and mixtures thereof, preferably the epoxy resin is a phenol novolac epoxy resin.

4. The two-part non-intumescent safety coating composition according to any one of claims 1 to 3, wherein the epoxy resin is present in a quantity from 5 to 40% by weight, based on the total weight of the first part of the composition, preferably from 7 to 20%, and more preferably from 10 to 14%.

5. The two-part non-intumescent safety coating composition according to any one of the preceding claims 1 to 4, wherein the wollastonite is present in a quantity from 45 to 75% by weight, based on the total weight of the first part of the composition, preferably from 48 to 70%, and more preferably from 52 to 63%,
and/or
wherein the wollastonite is present in a quantity from 20 to 75% by weight, based on the total weight of the second part of the composition, preferably from 25 to 73%, and more preferably from 27 to 70%.

6. The two-part non-intumescent safety coating composition according to any one of the preceding claims 1 to 5, wherein the inorganic filler is same or different in the first part and in the second part of the composition, and independently selected from the group consisting of talc, silica, silicone rubber powder, fly ash, trass, zirconia, zirconium silicate, glass, glass bubbles, glass microspheres, hollow glass spheres, ceramics, ceramic bubbles, ceramic microspheres, ceramic bubbles, kaolin, titanium oxide, vinyl functionalized aluminium silicate/kaolinite, zirconia silicate, and mixtures thereof, preferably the inorganic filler in the first part and/or in the second part is talc, glass bubbles, fly ash, silica, vinyl functionalized aluminium silicate/kaolinite, zirconia silicate, and mixtures thereof.

7. The two-part non-intumescent safety coating composition according to any one of the preceding claims 1 to 6, wherein the inorganic filler is present in a quantity from 5 to 25% by weight, based on the total weight of the first part of the composition, preferably from 10 to 20%, and more preferably from 13 to 17%,
and/or
wherein the inorganic filler is present in a quantity from 25 to 60% by weight, based on the total weight of the second part of the composition, preferably from 27 to 55%, and more preferably from 30 to 47%.

8. The two-part non-intumescent safety coating composition according to any one of the preceding claims 1 to 7, wherein the coupling agent is a silane coupling agent, preferably selected from the group consisting of epoxy functional silane oligomer, γ-aminopropyltriethoxysilane, γ-mercaptopropyltrimethoxysilane, γ-methacryloxypropyltrimethoxysilane, γ-glycidoxypropyltrimethoxylsilane, phenyltrimethoxysilane, and mixtures thereof, preferably the coupling agent is epoxy functional silane oligomer.

9. The two-part non-intumescent safety coating composition according to any one of the preceding claims 1 to 9, wherein the coupling agent is present in a quantity from 0.1 to 5% by weight, based on the total weight of the first part of the composition, preferably from 0.5 to 3%, and more preferably from 1 to 3%.

10. The two-part non-intumescent safety coating composition according to any one of the preceding claims 1 to 9, wherein the curing agent include one or more of: i) at least one polyamine having at least two amine hydrogens reactive toward epoxide groups; ii) at least one tertiary polyamide compound having at least two amine hydrogens reactive toward epoxide groups; groups; iii) at least one poly(amidoamine) compound having at least two amine hydrogens reactive toward epoxide; and iv) at least one polyetheramine compound having at least two amine hydrogens reactive toward epoxide, preferably curing agent is selected from the group consisting of N,N'-bis(3-aminopropyl)ethylenediamine, m-xylylenediamine (MXDA), N'-[2-(2-aminoethylamino)ethyl]ethane-1,2-diamine, and mixtures thereof, preferably the curing agent is N'-[2-(2-aminoethylamino)ethyl]ethane-1,2-diamine.

11. The two-part non-intumescent safety coating composition according to any one of the preceding claims 1 to 10, wherein the curing agent is present in a quantity from 5 to 25% by weight, based on the total weight of the second part of the composition, preferably from 10 to 20%, and more preferably from 13 to 17%.

12. The two-part non-intumescent safety coating composition according to any one of the preceding claims 1 to 11, wherein the composition further comprises a plasticizer, the plasticizer may be present in the first part of the composition, or in the second part of the composition or in the first and the second parts of the composition, and the plasticizer may be same or different in the first part and in the second part, and independently selected from the group consisting of tri-isobutyl phosphate (TiBP), triethyl phosphate (TEP), tributyl phosphate (TBP), di-isononyl phosphate (DINP), diphenyl cresyl phosphate (DPK), benzoic acid alkyl ester, di-isodecyl phthalate (DIOP), and mixtures thereof, preferably the plasticizer in the first part and in the second part is tri-isobutyl phosphate (TiBP).

13. The two-part non-intumescent safety coating composition according to claim 12, wherein the plasticizer is present in a quantity from 2 to 20% by weight, based on the total weight of the first part of the composition, preferably from 7 to 15%, and more preferably from 10 to 14%,
and/or
wherein the plasticizer is present in a quantity from 2 to 15% by weight, based on the total weight of the second part of the composition, preferably from 4 to 12%, and more preferably from 6 to 11%.

14. Cured product of the two-part non-intumescent safety coating composition according to any one of the preceding claims 1 to 13.

15. Use of two-part non-intumescent safety coating composition according to any one of the preceding claims 1 to 13 or cured product according to claim 14 in a battery, a battery box, a battery box lid, busbars, electronic covers, and structural parts of an e-vehicle.

16. A battery comprising a safety coating layer formed from a crosslinked two-part non-intumescent safety coating composition according to any one of claims 1 to 13 or cured product according to claim 14.

17. A process to apply the two-part non-intumescent safety coating composition according to any one of the preceding claims 1 to 13 onto a substrate comprising a step of applying the composition by an automated dispenser.
